# EUROPÄISCHE PATENTANMELDUNG

(11) **EP 1 707 806 A2**
(43) Veröffentlichungstag der Anmeldung: **04.10.2006**
(21) Anmeldenummer: 06005807.0
(22) Anmeldetag: 22.03.2006
(51) Int. Cl.: F03D 1/06, F03D 3/06

(54) **Rotorblatt für eine Windenergieanlage**

(30) Priorität: 01.04.2005 DE 102005014884
(71) Anmelder: NORDEX ENERGY GmbH, 22848 Norderstedt (DE)
(72) Erfinder: Rochholz, Hermann, Dr., 22848 Norderstedt (DE); Nitzpon, Joachim, 20255 Hamburg (DE)
(74) Vertreter: Schildberg, Peter

(57) **Zusammenfassung**

Rotorblatt für eine Windenergieanlage aus einem ersten Material aus Kunststoff und einem zweiten Material, das eine von dem ersten Material verschiedene Wärmeausdehnung besitzt, dadurch gekennzeichnet, daß das zweite Material derart mit dem ersten Material in dem Rotorblatt zusammenwirkt, daß bei einer Änderung der Temperatur der anströmenden Luft das Rotorblatt seine aerodynamische Profilform oder Torsion ändert.

## Beschreibung

Die vorliegende Erfindung betrifft ein Rotorblatt für eine Windenergieanlage.

Für Windenergieanlagen zur Stromerzeugung werden üblicherweise schnell laufende Turbinen eingesetzt. Dabei wird angestrebt, daß die Rotorblätter eine möglichst geringe bewegte Masse aufweisen und mit hoher Festigkeit ausgeführt sind. Hierzu werden meist glasfaserverstärkte Polyester- oder Epoxidharz-Verbundmaterialien eingesetzt, um aerodynamisch günstig geformte Blattprofile mit hoher Festigkeit herzustellen. Aufgrund der höheren Festigkeit werden auch Kohlefasermaterialien zum Aufbau der Rotorblätter eingesetzt.

Im Hinblick auf die Leistungsentnahme aus dem Wind ist neben dem Blattumriß auch die Stellung der Rotorblätter zur Windrichtung bzw. zur Rotationsebene von entscheidender Bedeutung. Um beim Betrieb der Windenergieanlage entlang der gesamten Blattlänge ähnliche Strömungsverhältnisse zu erreichen, wird das Rotorblatt in sich verdreht, indem eine Profilsehne, die die obere und untere Hälfte des Profilquerschnitts voneinander trennt, weiter zur Nabe des Rotorblatts hin stärker aus der Rotationsebene des Rotorblatts herausgedreht wird.

Aus DE 198 04 308 A1 ist ein dünnwandiges Profil bekannt, das zur Steigerung der aerodynamischen Effizienz die mechanischen Lasten reduziert und die Geräuschbildung vermindert. Hierzu werden Aktuatoren in dem Profil vorgesehen, die bei einer Betätigung zu einer Profiländerung führen. Neben magnetischen, elektrischen, hydraulischen oder pneumatischen Aktuatoren wird auch vorgeschlagen, Metallegierungen mit einem Formgedächtnis als Aktuatoren einzusetzen.

Aus DE 699 16 360 T2 ist ein Tragflügelprofil für ein Flugzeug bekannt, dessen Spitze aus einem harten Durometer-Elastomer gebildet ist, wobei die Spitze über einen Aktuator zur Änderung des Tragflügelprofils umgebogen werden kann.

Aus US 2,333,482 ist ein Tragflügelprofil bekannt, das an der Flügelhinterkante ein verformbares Metallblech aufweist. Zur Veränderung des Tragflügelprofils wird, gleichsam wie bei einer Klappe, der Anströmwinkel der Hinterkante verstellt.

Aus WO 03/078832 A1 ist ein Rotorblatt für eine Windenergieanlage bekannt. Das Rotorblatt besteht aus einem faserverstärkten Kunstoffmaterial, dem zwei Arten von Fasern mit unterschiedlicher Steifigkeit und Reißfestigkeit beigemischt sind. Die Fasern sind nicht gleichmäßig in dem Rotorblatt gemischt, sondern entlang der Blattlängsrichtung derart verteilt, daß die steiferen Fasern in einem größeren Verhältnis nahe der Blattwurzel auftreten, während die weniger steifen Fasern verstärkt im Bereich der Blattspitze vorhanden sind. Für die steiferen Fasern wird die Verwendung von Glasfasern beschrieben, während für die weniger steifen Fasern die Anwendung von Kohlefasern vorgeschlagen wird.

Aus WO 2004/088130 A1 ist ein Rotorblatt für eine Windenergieanlage bekannt, das eine Verstellung des aerodynamischen Rotorblatts im Profil erlaubt. Hierzu wird das Rotorblatt mit einer verformbaren Blattnase und Blatthinterkante versehen. Durch Ansteuern der Aktuatoren in dem Rotorblatt wird die Geometrie des Rotorblatts verändert.

Aus WO 94/04820 A1 ist es bekannt, bei Rotorblättern für stallregulierte Windanlagen ist ein Temperatursensor vorgesehen, der mit einem Aktuator zusammenwirkt, um den Aufbau des Rotorblatts dahingehend zu ändern, daß dieses bei abnehmender Temperatur weniger wirksam im Wind ist. Hierdurch wird die mit der Temperatur variierende Dichte der Luft ausgeglichen. Zur Änderung der Struktur des Rotorblatts ist eine teleskopisch verlängerbare Spitze vorgesehen.

Aus DE 197 19 221 C1 ist ein Rotorblatt für eine Windenergieanlage bekannt, das in einem Bereich aus flexiblem Material hergestellt ist und dessen Querschnittsform durch ein in dem Rotorblatt angeordnetes Material variiert werden kann.

Aus DE 203 20 714 U1 ist ein Rotorblatt für eine Windenergieanlage bekannt, die durch ein Paar von Gurten und dazwischen angeordneten Stegen versteift sind.

Der Erfindung liegt die technische Aufgabe zugrunde, bei Rotorblättern, insbesondere für stallgeregelte Windenergieanlagen, mit einem passiven System eine Anpassung an Veränderungen der Luftdichte vorzunehmen.

Erfindungsgemäß wird die Aufgabe durch ein Rotorblatt mit den Merkmalen aus Anspruch 1 gelöst. Vorteilhafte Ausgestaltungen bilden die Gegenstände der Unteransprüche.

Das erfindungsgemäße Rotorblatt besteht aus einem ersten Kunststoffmaterial und einem zweiten Material, das eine von dem ersten Material verschiedene Wärmeausdehnung besitzt. Erfindungsgemäß wirken erstes und zweites Material derart zusammen, daß bei einer Temperaturänderung der anströmenden Luft sich die aerodynamisch wirksame Profilform verändert. Ist, insbesondere bei stallgeregelten Anlagen, das Rotorblatt für Temperaturen im Sommer ausgelegt, nimmt demgegenüber die Luftdichte im Winter bei niedriger Temperatur zu. Da die Luftdichte proportional zur Leistung ist, die aus dem Wind entnommen wird, geht die Anlage im Winter im allgemeinen in Überleistung. Ist andererseits die Anlage für die Temperaturen im Winter eingestellt, so wird beispielsweise im Sommer die Nennleistung der Anlage nicht erreicht. Durch die Verwendung eines zweiten Materials, das mit dem ersten Kunststoffmaterial zusammenwirkt, um das aerodynamische Profil an die Umgebungstemperatur zu adaptieren, besitzt das Rotorblatt ein temperaturveränderliches Profil. Die Erfindung nutzt, daß Veränderungen der Luftdichte zum größten Teil in direktem Zusammenhang mit Temperaturveränderungen stehen.

Bevorzugt wird als erstes Kunststoffmaterial ein faserverstärktes Kunststoff material vorgesehen. Hierbei bilden die in dem Kunststoffmaterial angeordneten Fasern das zweite Material, das mit seiner Wärmeausdehnung das aerodynamisch wirksame Profil des Rotorblatts verändert.

In einer zweckmäßigen Ausgestaltung sind die Fasern in dem Kunststoffmaterial ausgerichtet. In der Ausrichtung der Fasern führt eine Temperaturänderung zu einer Dehnung oder Schrumpfung des ersten Kunststoffmaterials, womit zusätzliche Kräfte und Spannungen in das Rotorblatt eingetragen werden und eine Veränderung der Profilform erzielt wird.

In einer alternativen Ausgestaltung, die auch zusätzlich zu der vorbeschriebenen Anwendung von faserverstärktem Kunststoff eingesetzt werden kann, wird ein Verbund aus Schichten von erstem und zweitem Material eingesetzt. Um zum Ausgleich für die Temperaturänderung gezielte Formänderungen der aerodynamischen Profilform zu erzielen, ist es zweckmäßig, das zweite Material in vorbestimmten Bereichen als Schicht vorzusehen. In einer bevorzugten Ausgestaltung verändern die verbundenen Schichten aus erstem und zweitem Material eine vorgegebene Krümmung mit einer Temperaturänderung. Ähnlich einem Bi-Metall-Stab führt eine unterschiedliche Längenausdehnung einer der Schichten zu einer geänderten Krümmung in der Profilform.

In einer weiteren möglichen Ausgestaltung, die auch zusätzlich zu den zuvor beschriebenen Ausgestaltungen eingesetzt werden kann, ist mindestens ein Gurt in dem Rotorblatt aus dem zweiten Material vorgesehen. Der mindestens eine Gurt ist bevorzugt im Bereich der Blattspitze angeordnet. Durch die Längendehnung oder Verkürzung des Gurts wird direkt eine Kraft auf die Form des Rotorblatts ausgeübt; das Rotorblatt wird vorzugsweise tordiert.

In einer bevorzugten Ausgestaltung ist der mindestens eine Gurt auf der Saugseite des Rotorblatts in einem Winkel zur Rotorblattlängsachse angeordnet. Dabei ist das zur Blattwurzel weisende Ende näher zur Blattnase und das zur Blattspitze weisende Ende näher zur Blatthinterkante angeordnet.

In einer ebenfalls bevorzugten Ausgestaltung ist der Gurt auf der Druckseite des Rotorblatts in genau entgegengesetzter Richtung orientiert. Hierbei ist das zur Blattwurzel weisende Ende näher zur Blatthinterkante angeordnet und das zur Blattspitze weisende Ende näher zur Blattnase hin vorgesehen. In einer bevorzugten Ausgestaltung ist das zweite Material so ausgebildet, daß es sich bei einer Temperaturerhöhung in einer vorbestimmten Richtung verkürzt. Bevorzugt wird hierzu als Material eine Faser aus einem oder mehreren aromatischen Polyamiden und/oder Kohlefaser eingesetzt.

In einer alternativen Ausgestaltung dehnt sich das zweite Material bei einer Temperaturerhöhung in eine vorbestimmte Richtung. Als Material wird hierbei bevorzugt Glasfaser eingesetzt.

Um die Änderung des Luftdrucks mit der Temperatur bei einer stallgeregelten Windenergieanlage auszugleichen, erfolgt die Formänderung bevorzugt derart, daß bei einer Temperaturerniedrigung die Verdrehung des Rotorblatts flacher wird. Die Verdrehung des Rotorblatts bezieht sich auf die Rotationsebene und kennzeichnet das Herausdrehen der Anströmkante aus der Rotationsebene mit zunehmendem Abstand von der Nabe.

Zwei bevorzugte Ausführungsbeispiele für ein erfindungsgemäßes Rotorblatt werden nachfolgend anhand der Figuren näher erläutert. Es zeigt:
Fig. 1 einen Querschnitt durch ein Rotorblatt,
Fig. 2 eine Detailansicht der Blatthinterkante,
Fig. 3 eine schematische Ansicht der Blatthinterkante bei Umgebungstemperaturen von ungefähr +20 °C,
Fig. 4 eine schematische Ansicht der Blatthinterkante bei 0 °C,
Fig. 5 den Aufbau einer Blattspitze mit zwei Gurten,
Fig. 6 einen Querschnitt entlang der Linie VI-VI aus Fig. 5 und
Fig. 7 die Leistungsunterschiede für ein herkömmliches Rotorblatt bei +20 °C und bei -20 °C.

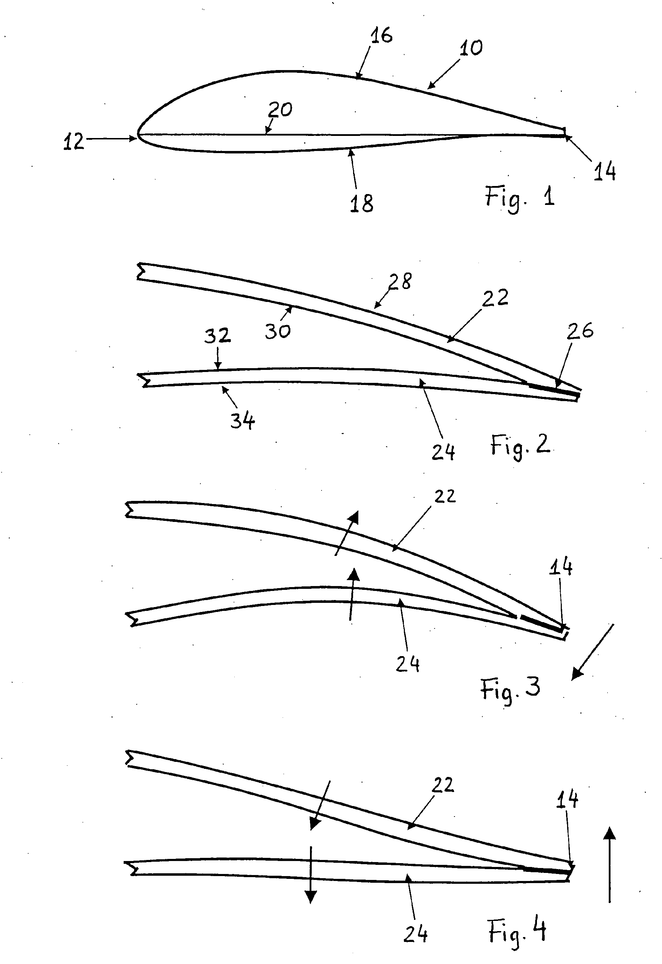

Fig. 1 zeigt schematisch einen Querschnitt durch ein Rotorblatt 10. Das Rotorblatt 10 besitzt eine Blattnase 12, die vom Wind angeströmt wird. Der Blattnase 12 gegenüber liegt die Blatthinterkante 14. Die Blattseite, an der die umströmende Luft den längeren Weg zurücklegt und an der somit ein geringerer Druck herrscht, wird als Saugseite 16 bezeichnet. Der Saugseite 16 gegenüber liegt die Druckseite 18. Zur Beschreibung der Geometrie des Rotorblatts ist es noch hilfreich die Profilsehne 20 zu definieren, deren Richtung in Fig. 1 dargestellt ist.

Fig. 2 zeigt eine Ansicht der Blatthinterkante, in der eine obere Halbschale 22 des Rotorblatts auf eine untere Halbschale 24 stößt. Die Halbschalen sind beispielsweise im Bereich 26 miteinander verklebt. Die obere Halbschale 22 besteht aus einem faserverstärkten Kunststoffmaterial, wobei in dem nach außen weisenden Bereich 28 eine höhere Konzentration von Glasfasern vorgesehen ist. In dem nach innen weisenden Bereich 30 ist eine höhere Konzentration von Aramidfasern vorgesehen. Aramidfasern bestehen aus aromatischen Polyamiden und werden beispielsweise unter den Markennamen Kevlar von DuPont oder Twaron von Teijin Twaron angeboten. Wie bereits erwähnt, besitzen Glasfasern und Aramidfasern ein unterschiedliches Wärmeausdehnungsverhalten. Während Glasfasern bei Temperaturerhöhung länger werden, besitzen Aramidfasern nahezu keine Veränderung der Länge mit der Temperatur, sondern verkürzen sich allenfalls bei steigender Temperatur.

In der zweiten Halbschale 24, die auf der Druckseite des Rotorblatts angeordnet ist, wurde im wesentlichen eine ähnliche Verteilung der Fasern in dem Glasfaserverbundstoff gewählt. Hierbei ist es jedoch so, daß auf der ins Rotorblattinnere weisenden Seite 32 die Konzentration an Glasfasern größer ist als auf der Außenseite. Auf der Außenseite ist in einem Bereich 34 die Konzentration an Aramidfasern erhöht.

Neben der vorstehenden Variante, bei der ein Faserverbundkunststoff verwendet wird, der lediglich auf unterschiedlichen Seiten unterschiedliche Konzentrationen aufweist, ist es auch möglich, zwei faserverstärkte Kunststoffe herzunehmen, von denen einer mit Aramidfasern versehen ist und der andere Glasfaser aufweist.

Die Fig. 3 zeigt die Wirkung des Materials bei hohen Temperaturen. Die zur Saugseite 22 weisenden Flächen dehnen sich hin zur Blatthinterkante und die zur Druckseite 24 weisenden Flächen bleiben unverändert oder ziehen sich zusammen. Hierdurch wird die Blatthinterkante 14 nach unten zur Druckseite hin geneigt. Sinkt die Temperatur, so wird, wie in Fig. 4 dargestellt, das Blatt flacher zum Wind gestellt und die aerodynamische Leistung des Profils verringert, wodurch die Leistungserhöhung durch die Dichteerhöhung der anströmenden Luft kompensiert wird.

Fig. 7 zeigt beispielhaft den Verlauf der Leistung abhängig von der Windgeschwindigkeit für zwei unterschiedliche Temperaturen. Die Kurve 36 zeigt die Leistungaufnahme durch das Rotorblatt bei einer Temperatur von -20 °C. Bei einer deutlich höheren Temperatur von +20 °C ergibt sich die deutlich niedrigere Leistungsaufnahme 38.

Ursache für die größere Leistungsaufnahme bei niedriger Temperatur liegt in der zunehmenden Dichte der anströmenden Luft, die sich auf die Leistungsaufnahme auswirkt.

Der Vergleich der beiden Kurven zeigt, daß, wenn die Anlage für die eine Temperatur auf eine Leistung von beispielsweise 1300 kW eingestellt ist, bei einer deutlich niedrigeren Temperatur die Anlage fast 1500 kW liefert.

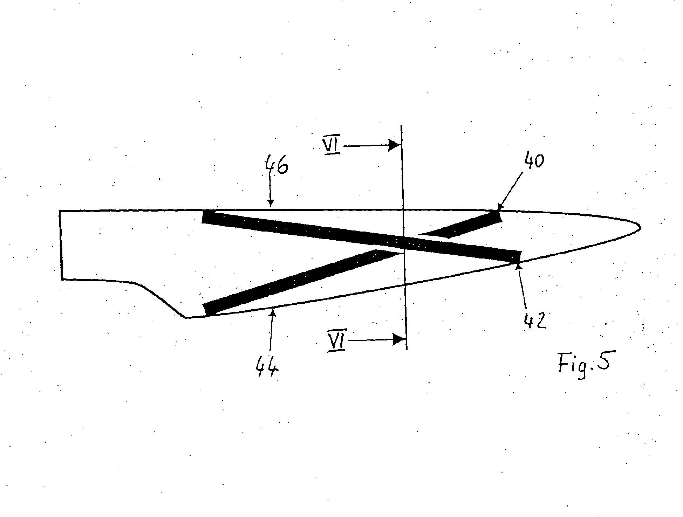

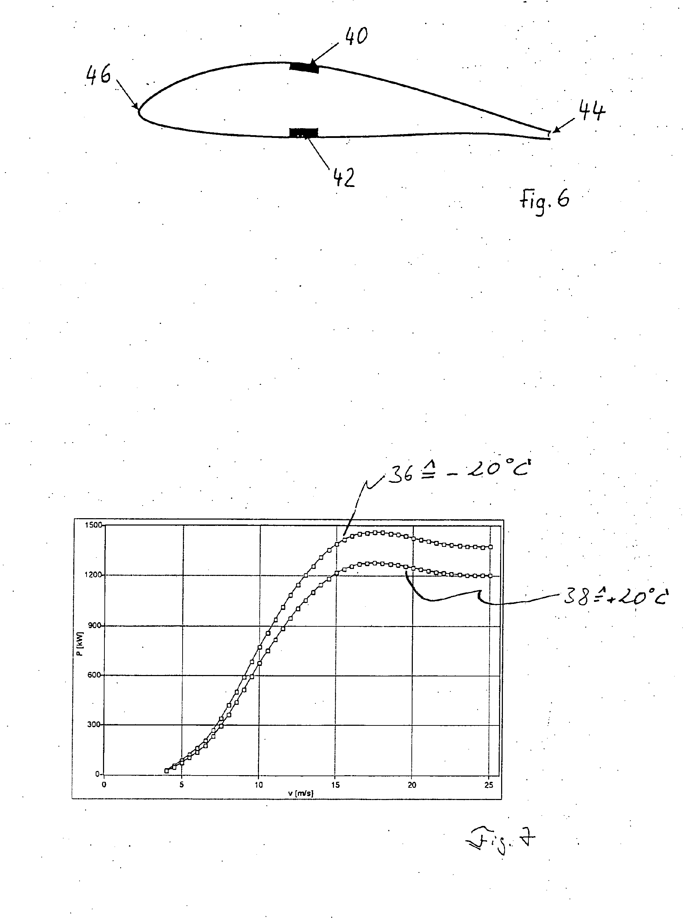

Fign. 5 und 6 zeigen ein weiteres Ausführungsbeispiel einer erfindungsgemäßen Ausgestaltung, bei der über zwei Gurte 40 und 42 aus Aramid ein temperaturveränderlicher Twist, also eine Verdrehung an der Profilsehne gegenüber der Rotationsebene, erzielt wird. Fig. 5 zeigt eine Ansicht der Blattspitze mit einer Blatthinterkante 44 und einer Blattnase 46. Für die dargestellte Anordnung ergibt sich bei der Verwendung von Aramidgurten 40 und 42 für eine Temperaturerniedrigung, daß das Blatt flacher zum Wind gestellt und somit der aerodynamische Stall des Profils forciert wird. Im Gegensatz zu dem ersten Ausführungsbeispiel wird bei dem Ausführungsbeispiel aus den Fign. 5 und 6 das Stallverhalten durch eine Torsion des Rotorblatts um die Längsachse verändert. Bei niedrigen Temperaturen wird das Blatt im Bereich der Spitze aerodynamisch höher angestellt und die Strömung löst sich dadurch bei einer geringeren Windgeschwindigkeit ab ("Stall"), so daß eine Überleistung vermieden wird.

Optional ist vorgesehen, beide Anordnungen miteinander zu kombinieren.

## Patentansprüche

1. Rotorblatt (10) für eine Windenergieanlage aus einem ersten Material aus Kunststoff und einem zweiten Material, das eine von dem ersten Material verschiedene Wärmeausdehnung besitzt, **dadurch gekennzeichnet, daß** das zweite Material derart mit dem ersten Material aus Kunststoff in dem Rotorblatt zusammenwirkt, daß bei einer Änderung der Temperatur der anströmenden Luft das Rotorblatt seine aerodynamische Profilform ändert.

2. Rotorblatt nach Anspruch 1, **dadurch gekennzeichnet, daß** als erstes Material faserverstärkter Kunststoff vorgesehen ist, bei dem die Fasern als zweites Material vorgesehen sind.

3. Rotorblatt nach Anspruch 2, **dadurch gekennzeichnet, daß** die Fasern gerichtet in das erste Material eingearbeitet sind.

4. Rotorblatt nach einem der Ansprüche 1 bis 3, **dadurch gekennzeichnet, daß** das zweite Material als Schicht in vorbestimmten Bereichen mit dem ersten Material verbunden ist.

5. Rotorblatt nach Anspruch 4, **dadurch gekennzeichnet, daß** die verbundenen Schichten eine vorgegebene Krümmung besitzen, die sich bei einer Temperaturänderung verändert.

6. Rotorblatt nach einem der Ansprüche 1 bis 5, **dadurch gekennzeichnet, daß** mindestens ein Gurt (40, 42) in dem Rotorblatt aus dem zweiten Material vorgesehen ist.

7. Rotorblatt nach Anspruch 6, **dadurch gekennzeichnet, daß** der mindestens eine Gurt (40, 42) im Bereich der Blattspitze angeordnet ist.

8. Rotorblatt nach Anspruch 6 oder 7, **dadurch gekennzeichnet, daß** der mindestens eine Gurt (42) auf der Druckseite einen Winkel mit der Rotorblattlängsachse einschließt, wobei das zur Blattwurzel weisende Ende näher zur Blattnase (46) und das zur Blattspitze weisende Ende näher zur Blatthinterkante (44) angeordnet ist.

9. Rotorblatt nach einem der Ansprüche 6 bis 8, **dadurch gekennzeichnet, daß** zusätzlich oder ausschließlich ein Gurt (40) auf der Saugseite einen Winkel mit der Rotorblattlängsachse einschließt, wobei das zur Blattwurzel weisende Ende näher zur Blatthinterkante (44) und das zur Blattspitze weisende Ende näher zur Blattnase (46) angeordnet ist.

10. Rotorblatt nach Anspruch 6 oder 7, **dadurch gekennzeichnet, daß** der mindestens eine Gurt (40) auf der Saugseite einen Winkel mit der Rotorblattlängsachse einschließt, wobei das zur Blattwurzel weisende Ende näher zur Blattnase (46) und das zur Blattspitze weisende Ende näher zur Blatthinterkante (44) angeordnet ist.

11. Rotorblatt nach einem der Ansprüche 6, 7 oder 10, **dadurch gekennzeichnet, daß** zusätzlich oder ausschließlich ein Gurt (42) auf der Druckseite einen Winkel mit der Rotorblattlängsachse einschließt, wobei das zur Blattwurzel weisende Ende näher zur Blatthinterkante (44) und das zur Blattspitze weisende Ende näher zur Blattnase (46) angeordnet ist.

12. Rotorblatt nach einem der Ansprüche 1 bis 11, **dadurch gekennzeichnet, daß** das zweite Material sich bei einer Temperaturerhöhung in einer vorbestimmten Richtung verkürzt.

13. Rotorblatt nach Anspruch 12, **dadurch gekennzeichnet, daß** als zweites Material Aramidfasern und/oder Kohlefasern vorgesehen sind.

14. Rotorblatt nach einem der Ansprüche 1 bis 11, **dadurch gekennzeichnet, daß** das zweite Material sich bei einer Temperaturerhöhung in einer vorbestimmten Richtung verlängert.

15. Rotorblatt nach Anspruch 14, **dadurch gekennzeichnet, daß** als zweites Material Glasfasern vorgesehen sind.

16. Rotorblatt nach einem der Ansprüche 1 bis 15, **dadurch gekennzeichnet, daß** mit einer Temperaturemiedrigung eine Formänderung eintritt derart, daß die Verdrehung des Rotorblatts flacher wird.
